# FASCICULE DE BREVET EUROPEEN

(11) **EP 3 956 160 B1**
(45) Date de publication et mention de la délivrance du brevet: **05.06.2024**
(21) Numéro de dépôt: 20722488.2
(22) Date de dépôt: 14.04.2020
(51) Int. Cl.: B60H 1/00, G06V 20/59

(54) **SYSTEME DE GESTION DU CONFORT THERMIQUE D'UNE PERSONNE**
SYSTEM ZUR VERWALTUNG DES THERMISCHEN KOMFORTS EINER PERSON
SYSTEM FOR MANAGING THE THERMAL COMFORT OF A PERSON

(30) Priorité: 19.04.2019 FR 1904231
(43) Date de publication de la demande: 23.02.2022
(73) Titulaire: VALEO SYSTEMES THERMIQUES, 78320 Le Mesnil Saint-Denis (FR)
(72) Inventeur: NEVEU, Daniel, 78322 LE MESNIL SAINT-DENIS CEDEX (FR); ZOUBAIRI, Jeremie, 78322 LE MESNIL SAINT DENIS CEDEX (FR)
(74) Mandataire: Valeo Systèmes Thermiques
(86) Numéro de dépôt international: PCT/EP2020/060497
(87) Numéro de publication internationale: WO 2020/212366

(56) Documents cités:
- WO-A1-2018/229384
- US-A- 5 145 112
- US-B2- 7 962 441

## Description

La présente invention se rapporte à un système de gestion du confort thermique d'une personne.

Dans un véhicule automobile, il est connu de prévoir une gestion des débits, températures et répartition de l'air soufflé par les différents aérateurs en fonction des conditions extérieures de température et d'ensoleillement. Sur certains véhicules, cela peut être combiné avec l'activation d'un volant chauffant et/ou d'un siège chauffant ou refroidissant. La détection et/ou la prise en compte de l'état thermique des passagers est quasiment inexistante, hormis quelques exemples d'utilisation de capteurs infrarouges qui détectent la température superficielle des vêtements des passagers pour mieux tenir compte des conditions initiale lors de la phase transitoire d'accueil (lorsque la personne vient d'une ambiance froide ou chaude) et de l'équilibre thermique résultant des échanges radiatifs et convectifs. En général la mesure de l'état thermique de l'habitacle se limite à une mesure de températures d'air combinée avec un capteur d'ensoleillement. Des approches plus sophistiquées de la gestion du confort ont été proposées en s'appuyant sur de nouveaux capteurs, en particulier des caméras infrarouges, et de nouveaux actionneurs, en particulier des panneaux radiants et/ou des apports d'air localisés.

Il est possible de définir le confort thermique d'un passager comme la condition de ressenti qui traduit la satisfaction avec l'environnement thermique et qui est évaluée par une évaluation subjective. Pour piloter ou prévoir le confort thermique dans l'habitacle automobile, il est souhaitable d'estimer l'activité métabolique et l'habillement de la personne en tant que données d'entrée d'un modèle thermo-physiologique. Le ressenti thermique est l'expression psycho-physiologique du stress thermique d'une personne et ce ressenti est différent pour les hommes et les femmes. Cela dépend également de l'âge, des vêtements, du moment de la journée, etc.

Les modèles thermo-physiologiques qui décrivent le confort thermique d'une personne, comme le modèle de Fanger, prennent en compte notamment le niveau d'habillement dans le calcul des échanges thermiques.

Le résultat de la détection du sexe est généralement binaire, à savoir Homme ou Femme. De même la classification des vêtements est souvent réduite à quelques niveaux de vêtements, tels que maillot de bain, costume d'été, costume décontracté à la maison, costume d'hiver.

En raison des limitations liées au bruit du ou des capteurs et de l'algorithme de reconnaissance, il peut arriver des sauts d'un état à un autre qui puissent rendre instable la prédiction de confort. Dans certains cas, le profil ou l'état de l'occupant ne peut pas être lié à une catégorie prépondérante de genre, car les personnes ont généralement des caractéristiques masculines et féminines. Il en va de même pour les niveaux de vêtements intermédiaires. Cette problématique de catégorisation du profil ou de l'état d'une personne s'applique aussi à d'autres caractéristiques, telles que l'état émotionnel ou l'activité des passagers.

Le document WO2018229384 décrit une méthode d'identification pour décrire l'habillement de passagers d'un véhicule prenant en compte une multitude de situations et de types d'habillements utilisant un apprentissage par réseau de neurones.

L'invention vise à améliorer la gestion du confort d'un passager de véhicule automobile.

L'invention a ainsi pour objet un système de gestion de confort thermique d'une personne, notamment à bord d'un véhicule automobile, ce système étant agencé pour utiliser au moins une caractéristique d'état de la personne, cette caractéristique pouvant prendre une pluralité de valeurs, ces valeurs étant discrètes ou continues, ce système comprenant une unité de traitement agencée pour :
a. acquérir, à l'aide d'un capteur, des données relatives à la personne, ce capteur étant notamment une caméra agencée pour acquérir une image de la personne,
b. évaluer, en fonction de ces données acquises, la probabilité que la caractéristique d'état prenne une première valeur en associant à cette première valeur un premier taux de confiance,
c. évaluer en fonction de ces données acquises, la probabilité que la caractéristique d'état prenne une deuxième valeur en associant à cette deuxième valeur un deuxième taux de confiance,
d. affecter à la caractéristique d'état une valeur ajustée qui est en fonction au moins desdites première et deuxième valeurs et desdits taux de confiance associés.

Ainsi, l'invention propose, au lieu d'attribuer une catégorie ou valeur pour chaque caractéristique, d'évaluer une probabilité de catégorie ou valeur, probabilité par exemple comprise entre 0 et 1. L'ensemble des catégories ou valeurs possibles peuvent être de nature binaire ou être classées en catégories, et la somme des probabilités attribuées à cet ensemble est de préférence égale à 1, chaque probabilité individuelle étant comprise entre 0 et 1.

Dans un exemple de l'invention, on peut définir une probabilité complémentaire comme la probabilité qu'un événement ne se produise pas. Cette probabilité complémentaire est définie comme étant le complément à 1 de la probabilité que l'événement se produise. Par exemple si la probabilité qu'un événement se produise est Y, alors la probabilité complémentaire que l'événement ne se produise pas est 1-Y. Par exemple: si la probabilité d'un événement est de 0,80 (ou 80%), la probabilité complémentaire que l'événement ne se produise pas est 1-0,80 = 0,20 (ou 20%).

A titre d'exemple, si la probabilité de détection du sexe en tant qu'homme est de 60%, les chances de prédire le sexe en tant que femme sont de 40%. La présente invention prend en compte la probabilité restante de 40% en considérant tous les paramètres. En prenant en compte ces paramètres, il est possible de construire un nouveau modèle de métabolisme à l'équilibre et de confort pour la prédiction.

Selon un aspect optionnel de l'invention, le système est agencé pour utiliser en outre au moins une caractéristique d'état de l'environnement thermique de la personne, cette caractéristique pouvant prendre une pluralité de valeurs, ces valeurs étant discrètes ou continues, l' unité de traitement étant agencée pour :
- acquérir, à l'aide d'un capteur, des données relatives à l'environnement thermique de la personne.

Selon un aspect de l'invention, pour prédire le confort des passagers, il est possible de prendre en compte différentes caractéristiques d'état qualitatives, telles que le sexe, le type de vêtement, l'activité, la posture, l'état émotionnel, etc.:.

Selon un aspect de l'invention, la caractéristique d'état, telle que l'âge, le poids ou la taille, peut être décrite par un modèle de régression continue ou être décrite par un ensemble de catégories discrètes telles que femme ou homme pour le sexe, grâce à un algorithme de classification, en utilisant par exemple un réseau de neurones ou un réseau bayésien pour évaluer et classifier chaque caractéristique dans une catégorie.

Selon un aspect de l'invention, chaque catégorie détectée est accompagnée d'un taux de confiance qui correspond au niveau de probabilité que la catégorie détectée soit la bonne.

Pour les cas où l'algorithme de classification n'est pas totalement robuste, ou qu'une catégorie peut être associée à l'utilisation de différents capteurs ou algorithmes de traitement, ou qu'il existe des catégories manquantes, ou qu'il existe des parasites ou des incertitudes dans les données d'entrée ou le signal du capteur, la catégorie détectée peut être associée à un taux de confiance (ou niveau de probabilité) qui est le plus élevé parmi toutes les catégories possibles. Ainsi, les autres catégories ont également chacun un taux de confiance qui est inférieur au taux de confiance le plus élevé, ce qui donne des informations sur l'incertitude liée à la catégorisation ou sur un éventuel chevauchement du profil et de l'état du passager entre les catégories.

La présente invention s'appuie ainsi notamment sur le concept de catégories mixtes, chaque catégorie mixte étant une combinaison de catégories prédéfinies avec une contribution pondérée de chaque catégorie constitutive en fonction de son taux de confiance.

Selon un aspect de l'invention, un passager peut être détecté en tant qu'homme avec une probabilité de 60% et en tant que femme avec une probabilité de 40%. Une approche traditionnelle aurait conduit à le classer Homme, de manière binaire.

L'invention propose ainsi notamment de considérer que le profil et l'état du passager, et donc sa réponse et son comportement, est pour 60% dans la catégorie Homme et 40% dans la catégorie Femme.

L'invention permet notamment d'améliorer la robustesse de la catégorisation des caractéristiques d'état des passagers en tenant compte du niveau de confiance et du niveau de probabilité pour chaque catégorie.

Un autre avantage permis par l'invention est de lisser la stratégie de contrôle du confort en évitant un changement soudain dans la classification de catégorie, en fonction du bruit du capteur ou de l'instabilité du modèle neural, ce qui entraînerait un changement soudain dans l'évaluation du confort et potentiellement une certaine instabilité dans le contrôle du confort.

L'invention permet également, si cela est souhaitable, d'introduire et d'utiliser le profil / état / comportement du passager qui est en réalité un chevauchement ou une combinaison de plusieurs catégories. Par exemple, une personne peut avoir un comportement thermo-physiologique qui n'est pas complètement aligné sur une activité métabolique masculine moyenne ou sur une activité métabolique féminine moyenne, mais entre les deux. De la même manière, le passager n'est pas nécessairement classifiable de manière exclusive dans la catégorie «Bras nus» ou «Bras habillés», mais entre les deux si les manches sont retroussées.

Selon un aspect de l'invention, dans le cas où la caractéristique d'état est un niveau ou catégorie d'émotions, il est possible de superposer différentes émotions avec des taux de confiance différents. Par exemple, un état et un comportement peuvent être décrits à 30% comme ceux d'une personne en colère et à 70% comme ceux d'une personne heureuse, selon le taux de confiance de chaque état.

Selon l'un des aspects de l'invention, la caractéristique d'état est une caractéristique pouvant prendre plusieurs valeurs, chaque valeur correspondant à une catégorie choisie parmi une pluralité de catégories.

Selon l'un des aspects de l'invention, la caractéristique d'état est un genre du passager pouvant prendre une valeur correspondant à une catégorie Homme et une valeur correspondant à une catégorie Femme.

Selon l'un des aspects de l'invention, la caractéristique d'état est un niveau de couverture de la tête du passager, caractéristique pouvant prendre une valeur correspondant à une catégorie tête chauve, une valeur correspondant à une catégorie tête avec cheveux, une valeur correspondant à une catégorie tête avec un chapeau notamment.

Selon l'un des aspects de l'invention, la caractéristique d'état est un niveau d'état émotionnel du passager, caractéristique pouvant prendre une valeur correspondant à une catégorie d'état de colère, une valeur correspondant à une catégorie d'état inquiet, une valeur correspondant à une catégorie d'état heureux par exemple.

Selon l'un des aspects de l'invention, le système est agencé pour déterminer un taux de confiance pour chaque valeur de la caractéristique d'état, notamment à l'aide d'un ou plusieurs réseaux de neurones du système, ou d'un réseau bayésien du système, ou de tout autre capteur et algorithme de traitement.

Selon l'un des aspects de l'invention, chaque taux de confiance est compris entre 0 et 1, notamment la somme des taux de confiance associés aux valeurs déterminées pour la caractéristiques d'état est égal à 1.

Selon l'un des aspects de l'invention, le système comprend au moins une chaine de mesure comprenant ledit capteur, une unité d'acquisition et l' unité de traitement faisant fonctionner un algorithme, cette chaine de mesure étant agencée pour fournir, pour la caractéristique d'état, des valeurs, valeurs correspondant notamment à des catégories, et de taux de confiance associés à ces valeurs.

Selon l'un des aspects de l'invention, le système est agencé pour affecter à la chaine de mesure un taux de confiance propre à la chaine de mesure, ce taux de confiance reflétant la fiabilité de cette chaine de mesure à donner un résultat fiable.

Selon l'un des aspects de l'invention, le système comporte une pluralité de chaine de mesures (Cj) pour déterminer des valeurs (Aij) de la caractéristique d'état (A), chaque chaine de mesures (Cij) étant agencée pour donner des valeurs (Aij) pour la caractéristiques d'état (A) avec une probabilité (Prob(Aij)) de sorte que le système attribue à chaque valeur (Ai) un taux de confiance global (Prob(Ai)) qui est fonction des taux de confiance (Conf(Cj)) propres à chaque chaine de mesures et des probabilités (Prob(Aij)) associés à chaque valeur (Aij) donnée par la chaine de mesure (Cj). Ainsi le taux de confiance global (Prob(Ai)) pourra s'exprimer par : Prob(Ai) = Σj [ Conf(Cj) * Prob(Aij) ] / Σj [ Conf(Cj) ]. Si les valeurs (Aij) de la caractéristique (A) sont de type numérique et continu, la valeur (A*) affectée à la caractéristique d'état (A) pourra alors s'exprimer par A* = Σi ( Prob(Ai) * Ai ) / Σi ( Prob(Ai)).

Selon l'un des aspects de l'invention, le système est agencé pour attribuer à la caractéristique d'état (E) une valeur (E*) décrite par une fonction (f), notamment une valeur continue, qui est fonction de valeurs g(Ai) prises pour chaque valeurs ou catégories (Ai) d'une autre caractéristique d'état (A), pondérées par le taux de confiance global Prob(Ai) associé à cette valeur ou catégorie (Ai). Par exemple il est possible d'avoir la formule E* = f ( [ Σi ( Prob(Ai) * g(Ai) ) / Σi ( Prob(Ai) ) ], Bk..) avec f étant un modèle ou algorithme et Bk étant une ou plusieurs autres caractéristiques d'état.

Selon l'un des aspects de l'invention, le système est agencé pour attribuer à la caractéristique d'état (E) une valeur (E*) qui est fonction de valeurs (Ei) prises par E pour chaque valeur ou catégorie (Ai), pondérées par le taux de confiance global Prob(Ai) associé à cette valeur ou catégorie (Ai). Par exemple il est possible d'avoir la formule E* = Σi ( Prob(Ai) * f (g(Ai) , Bk) ) / Σi ( Prob(Ai) ) avec f étant un modèle ou algorithme et Bk étant une ou plusieurs autres caractéristique, et Ei = f (g(Ai) , Bk) , g(Ai) étant notamment une valeur discrète.

Selon un exemple de l'invention, la fonction g peut prendre en compte des non linéarités entre la valeur (Ai) prise par une caractéristique d'état (A) et sa conséquence sur la valeur (Ei) via la fonction d'état f : Ei = f(Ai), en particulier lorsque les valeurs (Ai) sont de type discrète. Par exemple, (A) peut être le genre d'une personne prenant deux valeurs possibles (A1 = Homme, A2 = Femme) et (E) peut-être l'activité métabolique d'une personne dont l'expression dépend d'un coefficient C=g(Ai) qui peut prendre deux valeurs discrètes (g(A1) = 1, g(A2) = 0.8)

L'invention a encore pour objet un procédé de gestion de confort thermique d'une personne, notamment à bord d'un véhicule automobile, ce procédé utilisant au moins une caractéristique d'état de la personne, cette caractéristique pouvant prendre une pluralité de valeurs, ce procédé présentant les étapes suivantes, à l'aide d'une unité de traitement :
a. acquérir, à l'aide d'un capteur, des données relatives à la personne, ce capteur étant notamment une caméra agencée pour acquérir une image de la personne,
b. évaluer, en fonction de ces données acquises, la probabilité que la caractéristique d'état prenne une première valeur en associant à cette première valeur un premier taux de confiance,
c. évaluer en fonction de ces données acquises, la probabilité que la caractéristique d'état prenne une deuxième valeur en associant à cette deuxième valeur un deuxième taux de confiance,
d. affecter à la caractéristique d'état une valeur ajustée qui est en fonction au moins desdites première et deuxième valeurs et desdits taux de confiance associés

L'invention et ses différentes applications seront mieux comprises à la lecture de la description qui suit et à l'examen des figures qui l'accompagnent :

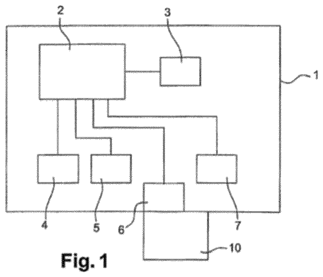

la [Fig. 1] illustre schématiquement un système de gestion de confort thermique selon un mode de réalisation non limitatif de l'invention.

On a représenté sur Fig. 1 un système 1 de gestion de confort thermique d'une personne à bord d'un véhicule automobile, ce système comportant plusieurs capteurs parmi lesquels :
- une caméra DMS (Driver Moniroing System) 3 agencée pour observer un passager dans l'habitacle,
- un ou plusieurs dômes 4 comportant une ou plusieurs caméras fonctionnant dans le spectre visible (RGB), et/ou proche infrarouge (NIR) et/ou infrarouge lointain (FIR) placée sur un plafond de l'habitacle et qui permet de visualiser des parois de l'habitacle et de certaines parties du corps des passagers
- un capteur de température extérieure et un capteur d'ensoleillement 5,
- au moins un capteur de température d'air 6 à la sortie d'un dispositif de climatisation ou de l'HVAC 10,
- un capteur révélateur des débits d'air et de leur répartition à la sortie d'un dispositif de climatisation ou de l'HVAC 10
- au moins un capteur de température d'air 7 régnant dans l'habitacle,
- préférablement un capteur d'humidité et des capteurs de température disposés dans certaines parois de l'habitacle
- préférablement un capteur de flux thermique sur les zones en contact avec les passagers.

Le système 1 est agencé pour utiliser au moins une caractéristique d'état de la personne (et optionnellement de son environnement thermique), cette caractéristique pouvant prendre une pluralité de valeurs, ces valeurs étant discrètes ou continues, ce système comportant une unité de traitement 2 agencée pour :
a. acquérir, à l'aide d'un des capteurs mentionnés ci-dessus, des données relatives à la personne (et optionnellement à son environnement thermique), ce capteur étant notamment une caméra agencée pour acquérir une image de la personne et/ou de son environnement thermique,
b. évaluer, en fonction de ces données acquises, la probabilité que la caractéristique d'état prenne une première valeur en associant à cette première valeur un premier taux de confiance,
c. évaluer en fonction de ces données acquises, la probabilité que la caractéristique d'état prenne une deuxième valeur en associant à cette deuxième valeur un deuxième taux de confiance,
d. affecter à la caractéristique d'état une valeur ajustée qui est en fonction au moins desdites première et deuxième valeurs et desdits taux de confiance associés.

Le système 1 est agencé pour attribuer à la caractéristique d'état (E) une valeur, notamment une valeur continue, qui est fonction de valeurs g(Ai) prises pour chaque valeurs ou catégories (Ai) d'une autre caractéristique d'état (A) pondérées par le taux de confiance global Prob(Ai) associé à cette valeur ou catégorie (Ai). Par exemple il est possible d'avoir la formule E = f ( [ Σi ( Prob(Ai) * g(Ai) ) / Σi ( Prob(Ai) ) ] , Bk..) avec f étant un modèle ou algorithme et Bk étant une ou plusieurs autres caractéristiques.

Selon l'un des aspects de l'invention, le système 1 est agencé pour attribuer à la caractéristique d'état (E) une valeur qui est fonction de valeurs (Ei) prises par E pour chaque valeur ou catégorie (Ai) d'une autre caractéristique d'état (A), pondérées par le taux de confiance global Prob(Ai) associé à cette valeur ou catégorie (Ai). Par exemple il est possible d'avoir la formule E = Σi ( Prob(Ai) * f (g(Ai) , Bk) ) / Σi ( Prob(Ai) ) avec f étant un modèle ou algorithme et Bk étant une ou plusieurs autres caractéristique, et Ei= f (g(Ai) , Bk) , g(Ai) étant notamment une valeur discrète.

Par exemple, la caractéristique d'état est le niveau de métabolisme MET du passager, ce niveau MET étant égal à 60%, qui est le taux de confiance, du niveau MET défini pour un Homme et 40% du niveau MET défini pour une Femme.

Dans un exemple, la caractéristique d'état RClo est le niveau de recouvrement vestimentaire des bras du passager, le niveau RClo étant égal à 50% d'un niveau RClo associé à un vêtement à manches longues et 50% d'un niveau RClo associé à un vêtement à manches courtes et 0% d'un niveau associé à des bras nus.

Dans un exemple, la caractéristique d'état est le niveau de bien-être du passager, ce niveau de bien-être étant égal à 50%, qui est le taux de confiance, d'un niveau « En colère », 0% d'un niveau « Heureux », 30% d'un niveau « Peur » et 20% d'un niveau « Anxieux ». Dans ce cas, la caractéristique d'état peut prendre quatre catégories possibles.

Dans un exemple de réalisation de l'invention, le système 1 comporte une pluralité de chaine de mesures pour déterminer des valeurs de la caractéristique d'état, chaque chaine de mesures étant agencée pour donner des valeurs pour la caractéristiques d'état avec un taux de confiance associé (Prob(Aij) de sorte que le système attribue à chaque valeur (Ai) un taux de confiance global (Prob(Ai)) qui est fonction des taux de confiance (Conf(Cj) propres à chaque chaine de mesures et des taux de confiance (Prob(Aij) associés à chaque valeur (Aij) donnée par la chaine de mesure. Ainsi, le taux de confiance global (Prob(Ai)) pourra s'exprimer par : Prob(Ai) = Σj [ Conf(Cj) * Prob(Aij) ] / Σj [ Conf(Cj) ]. Si les valeurs (Aij) de la caractéristique (A) sont de type numérique et continu, la valeur (A*) affectée à la caractéristque d'état (A) pourra alors s'exprimer par A* = Σi ( Prob(Ai) * Ai ) / Σi ( Prob(Ai).

La gestion thermique prend en compte les valeurs ci-dessus pondérées par les taux de confiances, notamment pour activer les actionneurs thermiques comme par exemple l'HVAC ou des panneaux radiants dans le véhicule.

## Revendications

1. Système de gestion de confort thermique (1) d'une personne, notamment à bord d'un véhicule automobile, ce système étant agencé pour utiliser au moins une caractéristique d'état de la personne, cette caractéristique pouvant prendre une pluralité de valeurs, **caractérisé en ce que** ce système comporte une unité de traitement (2) agencée pour :
a. acquérir, à l'aide d'un capteur, des données relatives à la personne, ce capteur étant une caméra agencée pour acquérir une image de la personne,
b. évaluer, en fonction de ces données acquises, la probabilité que la caractéristique d'état prenne une première valeur en associant à cette première valeur un premier taux de confiance,
c. évaluer en fonction de ces données acquises, la probabilité que la caractéristique d'état prenne une deuxième valeur en associant à cette deuxième valeur un deuxième taux de confiance,
d. affecter à la caractéristique d'état une valeur ajustée qui est en fonction au moins desdites première et deuxième valeurs et desdits taux de confiance associés.

2. Système selon la revendication précédente, selon lequel la caractéristique d'état est une caractéristique pouvant prendre plusieurs valeurs, chaque valeur correspondant à une catégorie choisie parmi une pluralité de catégories.

3. Système selon l'une des revendications précédentes, selon lequel la caractéristique d'état est un genre du passager pouvant prendre une valeur correspondant à une catégorie Homme et une valeur correspondant à une catégorie Femme.

4. Système selon l'une des revendications précédentes, selon lequel le système est agencé pour déterminer un taux de confiance pour chaque valeur de la caractéristique d'état, notamment à l'aide d'un ou plusieurs réseaux de neurones du système, ou d'un réseau bayésien du système, ou de tout autre capteur et algorithme de traitement.

5. Système selon l'une des revendications précédentes, selon lequel le système comprend au moins une chaine de mesure comprenant un ledit capteur, une unité d'acquisition et l'unité de traitement (2) faisant fonctionner un algorithme, cette chaine de mesure étant agencée pour fournir, pour la caractéristique d'état, des valeurs, valeurs correspondant notamment à des catégories, et de taux de confiance associés à ces valeurs.

6. Système selon la revendication précédente, selon lequel le système est agencé pour affecter à la chaine de mesure un taux de confiance propre à la chaine de mesure, ce taux de confiance reflétant la fiabilité de cette chaine de mesure à donner un résultat fiable.

7. Système selon l'une des revendications précédentes, selon lequel le système comporte une pluralité de chaine de mesures pour déterminer des valeurs de la caractéristique d'état, chaque chaine de mesures étant agencée pour donner des valeurs pour la caractéristiques d'état avec un taux de confiance associé (Prob(Aij) de sorte que le système attribue à chaque valeur (Ai) un taux de confiance global (Prob(Ai)) qui est fonction des taux de confiance (Conf(Cj) propres à chaque chaine de mesures et des taux de confiance (Prob(Aij) associés à chaque valeur (Aij) donnée par la chaine de mesure.

8. Système selon l'une des revendications précédentes, selon lequel le système est agencé pour attribuer à la caractéristique d'état (E) une valeur (E*), notamment une valeur continue, qui est fonction de valeurs g(Ai) prises pour chaque valeurs ou catégories (Ai) d'une autre caractéristique d'état (A) pondérées par le taux de confiance global Prob(Ai) associé à cette valeur ou catégorie (Ai). Par exemple il est possible d'avoir la formule E* = f ( [ Σi ( Prob(Ai) * g(Ai) ) / Σi ( Prob(Ai) ) ] , Bk..) avec f étant un modèle ou algorithme et Bk étant une ou plusieurs autres caractéristiques.

9. Système selon l'une des revendications précédentes, selon lequel le système est agencé pour attribuer à la caractéristique d'état (E) une valeur (E*) qui est fonction de valeurs (Ei) prises par E pour chaque valeur ou catégorie (Ai) d'une autre caractéristique d'état (A), pondérées par le taux de confiance global Prob(Ai) associé à cette valeur ou catégorie (Ai). Par exemple il est possible d'avoir la formule E = Σi ( Prob(Ai) * f (g(Ai) , Bk) ) / Σi ( Prob(Ai) ) avec f étant un modèle ou algorithme et Bk étant une ou plusieurs autres caractéristique, et Ei = f (g(Ai) , Bk) , g(Ai) étant notamment une valeur discrète.

10. Procédé de gestion de confort thermique d'une personne, notamment à bord d'un véhicule automobile, ce procédé utilisant au moins une caractéristique d'état de la personne, cette caractéristique pouvant prendre une pluralité de valeurs, ce procédé étant **caractérisé en ce qu'**il présente, les étapes suivantes à l'aide d'une unité de traitement (2):
a. acquérir, à l'aide d'un capteur, des données relatives à la personne, ce capteur étant une caméra agencée pour acquérir une image de la personne,
b. évaluer, en fonction de ces données acquises, la probabilité que la caractéristique d'état prenne une première valeur en associant à cette première valeur un premier taux de confiance,
c. évaluer en fonction de ces données acquises, la probabilité que la caractéristique d'état prenne une deuxième valeur en associant à cette deuxième valeur un deuxième taux de confiance,
d. affecter à la caractéristique d'état une valeur ajustée qui est en fonction au moins desdites première et deuxième valeurs et desdits taux de confiance associés.

## Patentansprüche

1. Verwaltungssystem des thermischen Komforts (1) einer Person, insbesondere in einem Kraftfahrzeug, wobei dieses System eingerichtet ist, um zumindest ein Zustandsmerkmal der Person zu verwenden, wobei dieses Merkmal eine Vielzahl von Werten annehmen kann, **dadurch gekennzeichnet, dass** dieses System eine Verarbeitungseinheit (2) aufweist, die eingerichtet ist, um:
a. mit Hilfe eines Sensors Daten bezüglich der Person zu erfassen, wobei dieser Sensor eine Kamera ist, die eingerichtet ist, um ein Bild der Person zu erfassen,
b. abhängig von diesen erfassten Daten die Wahrscheinlichkeit einzuschätzen, dass das Zustandsmerkmal einen ersten Wert annimmt, indem diesem ersten Wert eine erste Konfidenzrate zugeordnet wird,
c. abhängig von diesen erfassten Daten die Wahrscheinlichkeit einzuschätzen, dass das Zustandsmerkmal einen zweiten Wert annimmt, indem diesem zweiten Wert eine zweite Konfidenzrate zugeordnet wird,
d. dem Zustandsmerkmal einen angepassten Wert zuzuweisen, der mindestens von den ersten und zweiten Werten und den zugeordneten Konfidenzraten abhängt.

2. System nach dem vorhergehenden Anspruch, wobei das Zustandsmerkmal ein Merkmal ist, das mehrere Werte annehmen kann, wobei jeder Wert einer aus einer Vielzahl von Kategorien ausgewählten Kategorie entspricht.

3. System nach einem der vorhergehenden Ansprüche, wobei das Zustandsmerkmal ein Geschlecht des Insassen ist, das einen Wert, der einer Kategorie Mann entspricht, und einen Wert annehmen kann, der einer Kategorie Frau entspricht.

4. System nach einem der vorhergehenden Ansprüche, wobei das System eingerichtet ist, um eine Konfidenzrate für jeden Wert des Zustandsmerkmals zu bestimmen, insbesondere mit Hilfe eines oder mehrerer neuronalen Netze des Systems oder eines Bayesschen Netzes des Systems oder jedes anderen Sensors und Verarbeitungsalgorithmus.

5. System nach einem der vorhergehenden Ansprüche, wobei das System mindestens eine Messkette enthält, die einen Sensor, eine Erfassungseinheit und die Verarbeitungseinheit (2) enthält, die einen Algorithmus ausführt, wobei diese Messkette eingerichtet ist, um für das Zustandsmerkmal Werte zu liefern, Werte, die insbesondere Kategorien entsprechen, und von diesen Werten zugeordnete Konfidenzraten.

6. System nach dem vorhergehenden Anspruch, wobei das System eingerichtet ist, um der Messkette eine der Messkette eigene Konfidenzrate zuzuweisen, wobei diese Konfidenzrate die Zuverlässigkeit dieser Messkette, ein zuverlässiges Ergebnis zu liefern, reflektiert.

7. System nach einem der vorhergehenden Ansprüche, wobei das System eine Vielzahl von Messketten aufweist, um Werte des Zustandsmerkmals zu bestimmen, wobei jede Messkette eingerichtet ist, um Werte für das Zustandsmerkmale mit einer zugeordneten Konfidenzrate (Prob(Aij) zu erbringen, so dass das System jedem Wert (Ai) eine globale Konfidenzrate (Prob(Ai)) zuteilt, die von den jeder Messkette eigenen Konfidenzraten (Conf(Cj) und von den Konfidenzraten (Prob(Aij) abhängt, die jedem von der Messkette erbrachten Wert (Aij) zugeordnet sind.

8. System nach einem der vorhergehenden Ansprüche, wobei das System eingerichtet ist, um dem Zustandsmerkmal (E) einen Wert (E*) zuzuteilen, insbesondere einen kontinuierlichen Wert, der von Werten g(Ai) abhängt, die für jeden Wert oder Kategorie (Ai) eines anderen Zustandsmerkmals (A) gewichtet durch die diesem Wert oder dieser Kategorie (Ai) zugeordnete globale Konfidenzrate Prob(Ai) angenommen werden. Zum Beispiel ist es möglich, die Formel E* = f([Σi(Prob(Ai)*g(Ai))/Σi(Prob(Ai))], Bk..) zu haben, wobei f ein Modell oder Algorithmus und Bk eines oder mehrere andere Merkmale ist.

9. System nach einem der vorhergehenden Ansprüche, wobei das System eingerichtet ist, um dem Zustandsmerkmal (E) einen Wert (E*) zuzuteilen, der von Werten (Ei) abhängt, die von E für jeden Wert oder Kategorie (Ai) eines anderen Zustandsmerkmals (A) gewichtet durch die diesem Wert oder dieser Kategorie (Ai) zugeordnete globale Konfidenzrate Prob(Ai) angenommen werden. Zum Beispiel ist es möglich, die Formel E = Σi(Prob(Ai)*f(g(Ai),Bk))/Σi(Prob(Ai)) zu haben, wobei f ein Modell oder Algorithmus und Bk ein oder mehrere andere Merkmale ist, und Ei = f (g(Ai), Bk), wobei g(Ai) insbesondere ein diskreter Wert ist.

10. Verwaltungsverfahren des thermischen Komforts einer Person, insbesondere in einem Kraftfahrzeug, wobei dieses Verfahren mindestens ein Zustandsmerkmal der Person verwendet, wobei dieses Merkmal eine Vielzahl von Werten annehmen kann, wobei dieses Verfahren **dadurch gekennzeichnet ist, dass** es es die folgenden Schritte mit Hilfe einer Verarbeitungseinheit (2) aufweist:
a. Erfassen von Daten bezüglich der Person mit Hilfe eines Sensors, wobei dieser Sensor eine Kamera ist, die eingerichtet ist, um ein Bild der Person zu erfassen,
b. Einschätzen, abhängig von diesen erfassten Daten, der Wahrscheinlichkeit, dass das Zustandsmerkmal einen ersten Wert annimmt, indem diesem ersten Wert eine erste Konfidenzrate zugeordnet wird,
c. Einschätzen, abhängig von diesen erfassten Daten, der Wahrscheinlichkeit, dass das Zustandsmerkmal einen zweiten Wert annimmt, indem diesem zweiten Wert eine zweite Konfidenzrate zugeordnet wird,
d. Zuweisen eines angepassten Werts zum Zustandsmerkmal, der von mindestens den ersten und zweiten Werten und den zugeordneten Konfidenzraten abhängt.

## Claims

1. System (1) for managing the thermal comfort of a person, in particular on board a motor vehicle, this system being designed to use at least one state characteristic of the person, this characteristic being able to adopt a plurality of values, **characterized in that** this system comprises a processing unit (2) designed to:
a. acquire, using a sensor, data relating to the person, this sensor being a camera designed to acquire an image of the person,
b. evaluate, on the basis of these acquired data, the probability of the state characteristic adopting a first value by associating a first confidence level with this first value,
c. evaluate, on the basis of these acquired data, the probability of the state characteristic adopting a second value by associating a second confidence level with this second value,
d. assign, to the state characteristic, an adjusted value that is a function of at least said first and second values and said associated confidence levels.

2. System according to the preceding claim, wherein the state characteristic is a characteristic that may adopt multiple values, each value corresponding to a category chosen from among a plurality of categories.

3. System according to either of the preceding claims, wherein the state characteristic is a gender of the passenger that may adopt a value corresponding to a Male category and a value corresponding to a Female category.

4. System according to one of the preceding claims, wherein the system is designed to determine a confidence level for each value of the state characteristic, in particular using one or more neural networks of the system, or a Bayesian network of the system, or any other sensor and processing algorithm.

5. System according to one of the preceding claims, wherein the system comprises at least one measurement chain comprising one said sensor, an acquisition unit and the processing unit (2) running an algorithm, this measurement chain being designed to provide, for the state characteristic, values, values corresponding in particular to categories, and confidence levels associated with these values.

6. System according to the preceding claim, wherein the system is designed to assign the measurement chain a confidence level specific to the measurement chain, this confidence level reflecting the reliability of this measurement chain to give a reliable result.

7. System according to one of the preceding claims, wherein the system comprises a plurality of measurement chains for determining values of the state characteristic, each measurement chain being designed to give values for the state characteristic with an associated confidence level (Prob(Aij)) such that the system assigns each value (Ai) an overall confidence level (Prob(Ai)) that is a function of the confidence levels (Conf(Cj)) specific to each measurement chain and of the confidence levels (Prob(Aij)) associated with each value (Aij) given by the measurement chain.

8. System according to one of the preceding claims, wherein the system is designed to assign the state characteristic (E) a value (E*), in particular a continuous value, which is a function of values g(Ai) adopted for each value or category (Ai) of another state characteristic (A), weighted by the overall confidence level Prob(Ai) associated with this value or category (Ai). For example, it is possible to have the formula E* = f ( [ Σi ( Prob(Ai) * g(Ai) ) / Σi ( Prob(Ai) ) ] , Bk..), where f is a model or algorithm and Bk is one or more other characteristics.

9. System according to one of the preceding claims, wherein the system is designed to assign the state characteristic (E) a value (E*) that is a function of values (Ei) adopted by E for each value or category (Ai) of another state characteristic (A), weighted by the overall confidence level Prob(Ai) associated with this value or category (Ai). For example, it is possible to have the formula E = Σi ( Prob(Ai) * f (g(Ai) , Bk) ) / Σi ( Prob(Ai) ), where f is a model or algorithm and Bk is one or more other characteristics, and Ei = f (g(Ai) , Bk), g(Ai) being in particular a discrete value.

10. Method for managing the thermal comfort of a person, in particular on board a motor vehicle, this method using at least one state characteristic of the person, this characteristic being able to adopt a plurality of values, this method being **characterized in that** it has the following steps with the aid of a processing unit (2):
a. acquiring, using a sensor, data relating to the person, this sensor being a camera designed to acquire an image of the person,
b. evaluating, on the basis of these acquired data, the probability of the state characteristic adopting a first value by associating a first confidence level with this first value,
c. evaluating, on the basis of these acquired data, the probability of the state characteristic adopting a second value by associating a second confidence level with this second value,
d. assigning, to the state characteristic, an adjusted value that is a function of at least said first and second values and said associated confidence levels.
